# FASCICULE DE BREVET EUROPEEN

(11) **EP 0 800 055 B1**
(45) Date de publication et mention de la délivrance du brevet: **27.09.2000**
(21) Numéro de dépôt: 97400736.1
(22) Date de dépôt: 01.04.1997
(51) Int. Cl.: G01B 7/14, G01B 7/00, G01D 5/20

(54) **Capteur de positions linéaires et angulaires**
Linear- und Winkelpositionssensor
Linear and angular position sensor

(30) Priorité: 03.04.1996 FR 9604176
(43) Date de publication de la demande: 08.10.1997
(73) Titulaire: SAGEM SA, 75783 Paris Cédex 16 (FR)
(72) Inventeur: Sega, Patrick, 78600 Maisons Lafitte (FR); Piaton, Jérôme, 03100 Montlucon (FR)
(74) Mandataire: Gorrée, Jean-Michel

(56) Documents cités:
- EP-A- 0 194 932
- US-A- 5 130 650
- PATENT ABSTRACTS OF JAPAN vol. 010, no. 072 (P-438), 22 Mars 1986 & JP 60 209913 A (SONY KK), 22 Octobre 1985,
- PATENT ABSTRACTS OF JAPAN vol. 005, no. 205 (E-088), 25 Décembre 1981 & JP 56 125971 A (NIUCHI SHISHIO;OTHERS: 01), 2 Octobre 1981,

## Description

La présente invention concerne un agencement de capteur de position apte à fournir, simultanément, une information de position linéaire et une information de position angulaire

On connaît déjà, par exemple, par les brevets US-5 130 650 et EP-0 194 932, des dispositifs pour détecter la position angulaire d'un corps qui est mobile en rotation autour d'un axe.

L'invention vise à proposer un capteur de ce type qui, sans duplication de l'ensemble des moyens mis en oeuvre, soit apte à fournir simultanément deux signaux de sortie représentatifs respectivement d'une position linéaire et d'une position angulaire, pour repérer les positions d'un corps qui est mobile à la fois en rotation autour d'un axe et axialement le long dudit axe.

A cette fin, un capteur de position agencé conformément à l'invention se caractérise essentiellement en ce qu'il comporte :
- une première carcasse et une seconde carcasse de révolution autour d'un axe commun, l'une des carcasses entourant l'autre avec un entrefer entre leurs faces respectives mutuellement en regard, ces deux carcasses étant déplaçables l'une par rapport à l'autre en rotation autour dudit axe et/ou linéairement le long dudit axe,
- l'une des carcasses comportant au moins un aimant à surface axiale de révolution ayant un diamètre variable axialement, l'aimantation étant radiale ou diamétrale, et
- l'autre carcasse comportant une bague de retour de flux munie d'au moins deux sondes situées en regard de l'aimant et écartées l'une de l'autre d'une distance angulaire fonction du nombre de paires de pôles de l'aimant,
   . une première sonde étant située sur une partie de ladite bague traversée par un flux magnétique de retour qui est minimum quand la bague et l'aimant sont disposés l'un par rapport à l'autre en position angulaire de référence et étant apte à fournir un signal de sortie variable en fonction de la rotation mutuelle des deux carcasses,
   . et une seconde sonde étant située sensiblement sur une partie de ladite bague traversée par un flux magnétique de retour qui est maximum quand la bague et l'aimant sont disposés l'un par rapport à l'autre en position angulaire de référence et étant apte à fournir un signal de sortie variable en fonction de la valeur de l'entrefer qui varie elle-même en fonction de la position axiale mutuelle des deux carcasses.

Pour simplifier le décodage du signal de position axiale, il est souhaitable que le diamètre de la surface de l'aimant décroisse axialement, d'une extrémité axiale de l'aimant à l'autre ; en outre, compte tenu du niveau de bruit toujours important avec ce type de capteur, il est en pratique difficile et onéreux de recueillir et de traiter un signal analogique continûment variable : il est plus simple de traiter un signal incrémental et, à cette fin, de faire en sorte que la surface de l'aimant soit conformée en gradins annulaires successifs de diamètres décroissants, chaque gradin définissant une position axiale, le nombre des positions axiales détectables par le capteur étant fini et prédéterminé.

Dans un mode de réalisation simple et économique, l'aimant est bipolaire et les deux sondes sont écartées angulairement l'une de l'autre d'environ 90°.

Pour ce qui est également de la détection de position angulaire, il est difficile et coûteux d'effectuer une détection angulaire analogique et, au moins pour certaines applications, on peut réaliser le capteur de façon simplifiée pour qu'il détecte trois états de position angulaire mutuelle des deux carcasses, savoir une position angulaire centrée ou de référence correspondant à un écart angulaire sensiblement nul et deux positions de décalage angulaire respectivement de part et d'autre de ladite position centrée.

La structure générale mentionnée plus haut peut donner lieu à diverses réalisations pratiques. Il semble toutefois particulièrement intéressant que la carcasse équipée du susdit aimant soit mobile en rotation et axialement et que la carcasse constituée par ladite bague de retour de flux supportant les deux sondes soit fixe ; à titre de variante également intéressante, on peut prévoir que la carcasse équipée du susdit aimant soit fixe et que la carcasse formant bague de retour de flux soit mobile axialement et en rotation. Dans une autre variante de réalisation, on peut prévoir que la carcasse équipée du susdit aimant soit mobile respectivement axialement ou en rotation et que la carcasse formant bague de retour de flux soit mobile respectivement en rotation ou axialement.

Pour ce qui est de l'agencement respectif de l'aimant et de la bague de retour de flux, on peut prévoir, dans une réalisation simple, que la carcasse équipée de l'aimant soit intérieure et entourée par la carcasse constituée par la bague de retour de flux ; dans une variante, on peut prévoir que la carcasse équipée de l'aimant est extérieure, l'aimant étant de forme tubulaire et entourant la carcasse constituée par la bague de retour de flux.

Grâce aux dispositions conformes à l'invention, on est en mesure de réaliser un capteur de conception simple, qui est à lui seul capable de fournir simultanément deux types d'information de position (angulaire et axiale) ; un mode de réalisation préféré à la fois simplifié et peu coûteux, dans laquelle la carcasse équipée de l'aimant est mobile et intérieure à la bague de retour de flux qui est extérieure, est susceptible de donner satisfaction pour un grand nombre d'applications en étant apte à procurer trois valeurs de position angulaire et un nombre fini, prédéterminé, de valeurs de position axiale.

L'invention sera mieux comprise à la lecture de la description qui suit de certains modes de réalisation donnés uniquement à titre d'exemples non limitatifs. Dans cette description, on se réfère au dessin annexé sur lequel :
- la figure 1 est une vue simplifiée en coupe diamétrale d'un mode de réalisation préféré d'un capteur conforme à l'invention ;
- la figure 2 est une vue schématique en coupe transversale illustrant le fonctionnement du capteur de la figure 1 en tant que capteur de rotation ; et
- les figures 3 et 4 sont des vues simplifiées en coupe diamétrale d'autres modes de réalisation de capteurs conformes à l'invention.

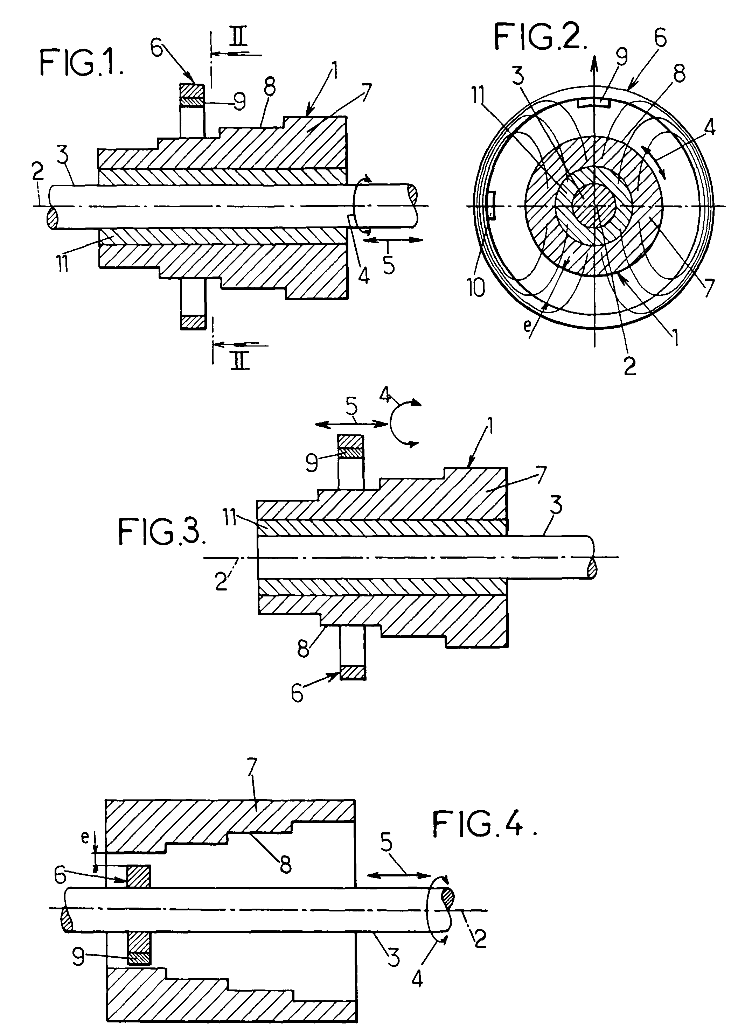

Un capteur de positions linéaire et angulaire agencé conformément à l'invention comporte, dans le mode de réalisation préféré qui est représenté aux fig. 1 et 2 :
- une carcasse mobile 1 qui est déplaçable en rotation autour d'un axe 2 et/ou linéairement le long dudit axe 2 ; dans l'exemple représenté, la carcasse 1 est solidaire d'un arbre 3 qui est animé d'un mouvement de rotation dans un sens ou dans l'autre (double flèche 4) et/ou d'un mouvement axial dans un sens ou dans d'autre (double flèche 5), ces deux mouvements ayant en général (mais non obligatoirement pour le mouvement de rotation) des amplitudes limitées ;
- une carcasse fixe 6 ;
- les deux carcasses 1 et 6 étant de révolution autour dudit axe 2 et l'une des carcasses (la carcasse fixe 6 dans le mode de réalisation préféré considéré) entourant l'autre (carcasse mobile 1) en définissant un entrefer e entre leurs faces respectives mutuellement en regard ;
- l'une des carcasses (la carcasse mobile 1 dans le mode de réalisation préféré représenté à la fig. 1) comportant au moins un aimant 7 à surface axiale 8 de révolution qui présente un diamètre variable axialement, l'aimantation étant radiale ou diamétrale (sur la fig. 2, l'aimantation est représentée comme étant diamétrale) ;
- l'autre carcasse (ici la carcasse fixe 6) étant constituée sous forme d'une bague de retour de flux munie d'au moins deux sondes 9 et 10 (voir fig. 2) qui sont situées en regard de l'aimant et qui sont écartées l'une de l'autre d'une distance angulaire fonction du nombre de paires de pôles de l'aimant :
   . une première sonde 10 est située sensiblement sur une partie de ladite bague de retour de flux 6 qui, dans la position centrée ou de référence des deux carcasses montrée à la fig. 2, est traversée par un flux magnétique de retour minimum et est apte à fournir un signal de sortie notamment d'amplitude variable en fonction de l'amplitude de rotation mutuelle des deux carcasses;
   . et une seconde sonde 9 est située sensiblement sur une partie de ladite bague de retour de flux 6 qui, dans la position centrée ou de référence des deux carcasses montrée à la fig. 2, est traversée par un flux magnétique de retour maximum et est apte à fournir un signal de sortie ayant notamment une amplitude variable en fonction de la valeur de l'entrefer e qui varie elle-même en fonction de la position axiale mutuelle des deux carcasses 1,6.

Les deux sondes 9 et 10 peuvent notamment être des sondes de Hall.

Dans le mode de réalisation préféré représenté aux figures 1 et 2, l'aimant 7 est supposé bipolaire, à aimantation diamétrale et les deux sondes sont écartées angulairement l'une de l'autre d'environ 90°, la sonde 9 étant située sensiblement dans la direction d'aimantation et la sonde 10 étant située dans une direction transversale à celle-ci.

Le signal de sortie fourni par les sondes 9 et 10 est fortement perturbé par les phénomènes parasites ambiants et il est difficile d'exploiter, dans des conditions économiques conciliables avec la recherche d'un coût minimum de l'ensemble du capteur, un signal analogique représentatif de déplacements angulaires et/ou linéaires de faibles amplitudes.

Il est donc préférable, pour constituer un capteur de faible prix, de ne détecter qu'un nombre restreint de positions discontinues pour des mouvements d'amplitudes extrêmes limitées.

Dans ces conditions, on prévoit, non seulement que le diamètre de la surface 8 de l'aimant 7 décroît axialement, d'une extrémité axiale de l'aimant à l'autre, afin de simplifier le processus de traitement du signal de sortie de la sonde 9, mais en outre que la surface 8 de l'aimant 7 est conformée en gradins annulaires de diamètres décroissants se succédant axialement, chaque gradin définissant une surface cylindrique de révolution qui définit elle-même avec la surface de la bague une valeur donnée de l'entrefer e ; on définit ainsi plusieurs positions axiales discrètes, en nombre fini et prédéterminé, permettant de repérer la position axiale mutuelle de l'aimant 7, et donc de l'arbre 3, par rapport à la bague fixe 6 avec une précision d'autant meilleure que le nombre des gradins, ou pas de mesure, est élevé.

De la même manière, en plaçant la sonde 10 dans la partie de la bague 6 parcourue par le flux de retour maximum, les conditions de sensibilité sont maximales : en effet, le signal de sortie de la sonde a alors une amplitude minimale (notamment nulle) lorsque la sonde se trouve localisée dans l'emplacement où le flux de retour est minimum, cette position correspondant à la position angulairement centrée ou de référence de l'aimant 7, et donc de l'arbre 3, par rapport à la bague 6 ; en déplaçant l'aimant 7 en rotation de part ou d'autre de cette position de référence, le flux de retour dans la bague 6 au droit de la sonde 10 augmente, et le signal de sortie de la sonde a une amplitude qui augmente de façon correspondante avec un signe + ou - selon le sens de la rotation. On est ainsi en mesure de détecter, de façon parfaitement fiable, au moins trois positions angulaires relatives, savoir une position 0 et deux positions angulairement déviées respectivement de part et d'autre de celle-ci. On peut également envisager, sans modification des moyens de traitement du signal de sortie de la sonde 10, de détecter cinq positions angulaires, savoir une position 0, deux positions déviées intermédiaires et deux positions déviées maximales, à condition que l'amplitude de rotation maximale soit suffisamment élevée, par exemple voisine de ± 90° ; toutefois il en résulte, dans ces positions extrêmes, une restriction sensible de la sensibilité fonctionnelle de l'autre sonde 9 qui se trouve alors placée dans un flux magnétique réduit : un compromis de fonctionnement doit alors être trouvé.

Dans le cas où l'arbre 3 n'est pas constitué en un matériau ferromagnétique, on peut interposer, entre l'aimant 7 et l'arbre 3, un manchon intercalaire 11 en matériau ferromagnétique propre à assurer le retour du flux magnétique.

On comprend que le fonctionnement du capteur conforme à l'invention est fondé sur la position relative angulaire de l'aimant 7 et de la sonde 10 et sur la position relative axiale de l'aimant 7 et de la sonde 9, et il est donc possible d'élaborer divers modes de réalisation pratique. Le mode de réalisation particulier qui vient d'être décrit et qui est représenté aux fig. 1 et 2 semble être celui qui offre les meilleurs avantages en raison de la simplicité de fabrication des pièces, et notamment de l'aimant, de son faible prix de revient autorisant des fabrications en très grande série, et de la facilité de son implantation. A ces titres, ce mode de réalisation est préféré et doit pouvoir trouver application dans un très grand nombre de domaines d'utilisation.

Toutefois, d'autres modes de réalisation sont envisageables.

Le mode de réalisation illustré à la fig. 3 conserve les mêmes pièces que le mode de réalisation des fig. 1 et 2, mais ici c'est la bague de retour de flux 6 qui est mobile en rotation et axialement (en étant solidaire d'un organe mobile non représenté), tandis que l'aimant 7 est fixe, son arbre de support 3 étant fixe. Compte tenu de l'identité structurelle du mode de réalisation de la fig. 3 avec celui des fig. 1 et 2, les avantages qu'il procure sont sensiblement les mêmes, et il peut, à ce titre, être lui aussi considéré comme un mode de réalisation préféré.

Il est également possible, en conservant les mêmes pièces structurelles, que chacune des carcasses 1 et 6 soit animée d'un mouvement simple, par exemple que l'aimant 7 soit mobile en rotation et la bague 6 soit mobile axialement, ou inversement.

A la fig. 4 est représenté encore un autre mode de réalisation dans lequel la position relative de l'aimant 7 et de la bague de retour de flux 6 est inversée. L'aimant 7 est extérieur et constituée sous forme tubulaire, avec sa surface intérieure conformée comme la surface 8 précitée, en l'occurrence en formant des gradins de diamètres successivement décroissants. L'aimant est solidaire d'un support non représenté. La bague de retour de flux 6 est solidaire de l'arbre 3 et porte les sondes 9 et 10 (seule la sonde 9 étant visible) ; éventuellement, la bague 6 peut physiquement disparaître et être constituée par l'arbre 3 lui-même qui supporte alors directement les sondes 9 et 10.

Dans l'exemple de la fig. 4, l'arbre 3 est susceptible d'un double mouvement axial 4 et de rotation 5, qui est donc communiqué à la bague 6 qui en est solidaire.

Toutefois, de même que précédemment, l'arbre 3 peut être fixe et l'aimant susceptible du double mouvement combiné (non représenté), ou bien l'arbre et l'aimant peuvent être chacun susceptible d'un mouvement unique (non représenté).

## Revendications

1. Capteur de positions linéaires et angulaires, caractérisé en ce qu'il comporte :
- une première carcasse (1) et une seconde carcasse (6) de révolution autour d'un axe commun (2), l'une des carcasses entourant l'autre avec un entrefer (e) entre leurs faces respectives mutuellement en regard, ces deux carcasses étant déplaçables l'une par rapport à l'autre en rotation (4) autour dudit axe et/ou linéairement (5) le long dudit axe,
- l'une (1) des carcasses comportant au moins un aimant (7) à surface axiale de révolution (8) ayant un diamètre variable axialement, l'aimantation étant radiale ou diamétrale, et
- l'autre carcasse (6) comportant une bague de retour de flux munie d'au moins deux sondes (9, 10) situées en regard de l'aimant (7) et écartées l'une de l'autre d'une distance angulaire fonction du nombre de paires de pôles de l'aimant,
. une première sonde (10) étant située sur une partie de ladite bague traversée par un flux magnétique de retour qui est minimum quand la bague et l'aimant sont disposés l'un par rapport à l'autre en position angulaire de référence et étant apte à fournir un signal de sortie variable en fonction de la rotation mutuelle des deux carcasses,
. et une seconde sonde (9) étant située sensiblement sur une partie de ladite bague traversée par un flux magnétique de retour qui est maximum quand la bague et l'aimant sont disposés l'un par rapport à l'autre en position angulaire de référence et étant apte à fournir un signal de sortie variable en fonction de la valeur de l'entrefer qui varie elle-même en fonction de la position axiale mutuelle des deux carcasses.

2. Capteur selon la revendication 1, caractérisé en ce que le diamètre de la surface (8) de l'aimant (7) décroît axialement, d'une extrémité axiale de l'aimant à l'autre.

3. Capteur selon la revendication 2, caractérisé en ce que la surface (8) de l'aimant (7) est conformée en gradins annulaires successifs de diamètres décroissants, chaque gradin définissant une position axiale, et en ce que le nombre des positions axiales détectables par le capteur est fini et prédéterminé.

4. Capteur selon l'une quelconque des revendications 1 à 3, caractérisé en ce que l'aimant (7) est bipolaire et en ce que les deux sondes (9, 10) sont écartées angulairement l'une de l'autre d'environ 90°.

5. Capteur selon l'une quelconque des revendications 1 à 4, caractérisé en ce qu'il est agencé pour détecter trois états de position angulaire mutuelle des deux carcasses (1, 6), savoir une position angulaire centrée correspondant à un écart angulaire sensiblement nul et deux positions de décalage angulaire respectivement de part et d'autre de ladite position centrée.

6. Capteur selon l'une quelconque des revendications 1 à 5, caractérisé en ce que la carcasse (1) équipée du susdit aimant (7) est mobile en rotation et axialement et en ce que la carcasse (6) constituée par ladite bague de retour de flux supportant les deux sondes (9, 10) est fixe.

7. Capteur selon l'une quelconque des revendications 1 à 5, caractérisé en ce que la carcasse (1) équipée du susdit aimant (7) est fixe et en ce que la carcasse (6) formant bague de retour de flux est mobile axialement et en rotation.

8. Capteur selon l'une quelconque des revendications 1 à 5, caractérisé en ce que la carcasse (1) équipée du susdit aimant (7) est mobile respectivement axialement ou en rotation et en ce que la carcasse (6) formant bague de retour de flux est mobile respectivement en rotation ou axialement.

9. Capteur selon l'une quelconque des revendications 1 à 8, caractérisé en ce que la carcasse (1) équipée de l'aimant (7) est intérieure et entourée par la carcasse (6) constituée par la bague de retour de flux.

10. Capteur selon l'une quelconque des revendications 1 à 8, caractérisé en ce que la carcasse (1) équipée de l'aimant (7) est extérieure, l'aimant étant de forme tubulaire et entourant la carcasse (6) constituée par la bague de retour de flux.

## Patentansprüche

1. Linear- und Winkelpositionssensor, **dadurch gekennzeichnet, dass** er
- ein erstes (1) und ein zweites um eine gemeinsame Achse (2) rotationssymmetrisches Gehäuse (6) umfasst, wobei eines der Gehäuse das andere mit einem Zwischenraum (e) zwischen ihren jeweils einander gegenüber liegenden Flächen umgibt und die beiden Gehäuse in Bezug auf einander um jene Achse drehbar (4) und/oder linear (5) entlang jener Achse bewegbar sind, wobei
- eines (1) der Gehäuse mindestens einen Magnet (7) mit axial rotationssymmetrischer Oberfläche (8) mit axial variablem Durchmesser enthält und die Magnetisierung radial oder diametrisch ist und
- das andere Gehäuse (6) einen Ring für die Magnetflussumkehr enthält, der mit mindestens zwei Sonden (9, 10) versehen ist, die sich dem Magnet (7) gegenüber befinden und deren Winkelabstand voneinander von der Anzahl der Polpaare des Magneten abhängig ist, wobei
• die die erste Sonde (10) sich auf einem Teil dieses Rings befindet, der von einem Umkehrmagnetfluss durchflossen wird, der ein Minimum hat, wenn Ring und Magnet in Bezug auf einander in Referenzwinkelposition angeordnet sind, und in der Lage ist, ein abhängig von der gegenseitigen Umdrehung der beiden Gehäuse veränderliches Ausgangssignal zu liefern, und
• die die zweite Sonde (9) sich im Wesentlichen auf einem Teil dieses Rings befindet, der von einem Umkehrmagnetfluss durchflossen wird, der ein Maximum hat, wenn Ring und Magnet in Bezug auf einander in Referenz- winkelposition angeordnet sind, und in der Lage ist, ein Ausgangssignal zu liefern, das abhängig von der Größe des Zwischenraums veränderlich ist, die ihrerseits abhängig von der gegenseitigen axialen Position der beiden Gehäuse variiert.

2. Sensor nach Anspruch 1, **dadurch gekennzeichnet, dass** der Durchmesser der Oberfläche (8) des Magneten (7) von einem axialen Ende des Magneten zum anderen axial abnimmt.

3. Sensor nach Anspruch 2, **dadurch gekennzeichnet, dass** die Oberfläche (8) des Magneten (7) als aufeinander folgende ringförmige Stufen mit abnehmendem Durchmesser ausgebildet ist, wobei jede Stufe eine axiale Position definiert, **und dass** die Anzahl der vom Sensor detektierbaren axialen Positionen endlich und vorher festgelegt ist.

4. Sensor nach einem der Ansprüche 1 bis 3, **dadurch gekennzeichnet, dass** der Magnet (7) zweipolig ist, und dass der Winkelabstand der zwei Sonden (9, 10) voneinander etwa 90° beträgt.

5. Sensor nach einem der Ansprüche 1 bis 4, **dadurch gekennzeichnet, dass** er angetrieben wird, um drei Zustände der gegenseitigen Winkelposition der beiden Gehäuse (1, 6) zu detektieren, nämlich eine mittige Winkelposition, die einer Winkelabweichung von im Wesentlichen gleich Null entspricht, und zwei Positionen einer Winkelverschiebung auf der einen bzw. anderen Seite der mittigen Position.

6. Sensor nach einem der Ansprüche 1 bis 5, **dadurch gekennzeichnet, dass** das mit dem Magnet (7) ausgestattete Gehäuse (1) drehbar und axial beweglich ist, **und dass** das Gehäuse (6), welches aus dem Ring für die Magnetflussumkehr besteht und die zwei Sonden (9, 10) trägt, feststehend ist.

7. Sensor nach einem der Ansprüche 1 bis 5, **dadurch gekennzeichnet, dass** das mit dem Magnet (7) ausgestattete Gehäuse (1) feststehend ist, **und dass** das von dem Ring für die Magnetflussumkehr gebildete Gehäuse (6) axial und drehbar beweglich ist.

8. Sensor nach einem der Ansprüche 1 bis 5, **dadurch gekennzeichnet, dass** das mit dem Magnet (7) ausgestattete Gehäuse (1) axial bzw. drehbar beweglich ist, **und dass** das von dem Ring für die Magnetflussumkehr gebildete Gehäuse (6) drehbar bzw. axial beweglich ist.

9. Sensor nach einem der Ansprüche 1 bis 8, **dadurch gekennzeichnet, dass** das mit dem Magnet (7) ausgestattete Gehäuse (1) innen liegt und von dem Gehäuse (6), das von dem Ring für die Magnetflussumkehr gebildet wird, umgeben ist.

10. Sensor nach einem der Ansprüche 1 bis 8, **dadurch gekennzeichnet, dass** das mit dem Magnet (7) ausgestattete Gehäuse (1) außen liegt, wobei der Magnet röhrenförmig ist und das von dem Ring für die Magnetflussumkehr gebildete Gehäuse (6) umgibt.

## Claims

1. A linear and angular position sensor, characterised in that it comprises:
- a first carcass (1) and a second carcass (6) of revolution about a common axis (2), one of the carcasses surrounding the other with an air gap (e) between their mutually facing respective surfaces, said two carcasses being displaceable relatively to one another in rotation (4) about said axis and/or linearly (5) along said axis,
- one (1) of the carcasses comprising at least one magnet (7) having an axial surface of revolution (8) having an axially variable diameter, the magnetisation being radial or diametric, and
- the other carcass (6) comprising a flux return ring provided with at least two probes (9, 10) situated facing the magnet (7) and spaced apart by an angular distance dependent on the number of pairs of poles of the magnet,
. a first probe (10) being situated on a part of the said ring traversed by a return magnetic flux which is minimum when the ring and the magnet are disposed relatively to one another in an angular reference position and being adapted to deliver an output signal which varies in dependence on the mutual rotation of the two carcasses,
. and a second probe (9) being situated substantially on a part of the said ring traversed by a return magnetic flux which is maximum when the ring and the magnet are disposed relatively to one another in an angular reference position and being adapted to deliver an output signal which varies in dependence on the value of the air gap which in turn varies in dependence on the mutual axial position of the two carcasses.

2. A sensor according to claim 1, characterised in that the diameter of the surface (8) of the magnet (7) decreases axially, from one axial end of the magnet to the other.

3. A sensor according to claim 2, characterised in that the surface (8) of the magnet (7) is configured in successive annular steps of decreasing diameter, each step defining an axial position, and in that the number of axial positions detectable by the sensor is finite and predetermined.

4. A sensor according to any one of claims 1 to 3, characterised in that the magnet (7) is bipolar and in that the two probes (9, 10) are angularly spaced apart by about 90°.

5. A sensor according to any one of claims 1 to 4, characterised in that it is adapted to detect three states of mutual angular position of the two carcasses (1, 6), namely a centred angular position corresponding to a substantially zero angular spacing and two angular offset positions respectively on either side of the said centred position.

6. A sensor according to any one of claims 1 to 5, characterised in that the carcass (1) provided with the said magnet (7) is movable in rotation and axially and in that the carcass (6) formed by the said flux return ring supporting the two probes (9, 10) is fixed.

7. A sensor according to any one of claims 1 to 5, characterised in that the carcass (1) provided with the said magnet (7) is fixed and in that the carcass (6) forming the flux return ring is movable axially and in rotation.

8. A sensor according to any one of claims 1 to 5, characterised in that the carcass (1) provided with the said magnet (7) is movable respectively axially or in rotation and in that the carcass (6) forming the flux return ring is movable respectively in rotation or axially.

9. A sensor according to any one of claims 1 to 8, characterised in that the carcass (1) provided with the magnet (7) is internal and is surrounded by the carcass (6) formed by the flux return ring.

10. A sensor according to any one of claims 1 to 8, characterised in that the carcass (1) provided with the magnet (7) is external, the magnet being of tubular shape and surrounding the carcass (6) formed by the flux return ring.
